# EUROPEAN PATENT APPLICATION

(11) **EP 2 272 665 A1**
(43) Date of publication of application: **12.01.2011**
(21) Application number: 10168202.9
(22) Date of filing: 02.07.2010
(51) Int. Cl.: B32B 15/01

(54) **Process for manufacturing foils, sheets and shaped parts from an alloy with titanium and aluminium as its main elements**

(30) Priority: 08.07.2009 EP 09401013
(71) Applicant: Brandenburgische Technische Universität Cottbus, 03046 Cottbus (DE)
(72) Inventor: Prof. Dr.-Ing. Zhang, Jiulai, 03046, Cottbus (DE); Prof. Dr.-Ing. Leyens, Christoph, 53639, Königswinter (DE)
(74) Representative: Wablat Lange Karthaus

(57) **Abstract**

**Summary**

The invention is related to a process for manufacturing foils, sheets and shaped parts from an alloy with titanium and aluminium as its main elements, wherein capsules of titanium and/or titanium alloy are filled completely either with one layer of foil or sheet of aluminium and/or aluminium alloy or with alternating layers of foil or sheet of aluminium and/or aluminium alloy and titanium and/or titanium alloy, that the borders of these capsules are sealed by means of known welding techniques with a vacuum created inside the capsules, and that the capsules are annealed under a pressure between 1 bar and 2500 bar at a temperature between 900°C and 1450°C where TiAl₃ is already soft or liquid but still below the melting point of the final product until TiAl₃ has disappeared due to diffusion, i.e. finally the desired alloy forms.

## Description

The invention relates to a process for manufacturing foils, sheets and shaped parts from an alloy with titanium and aluminium as its main elements. Gamma Titanium aluminides are high-temperature intermetallic materials whose density is only half of that of steel or nickel based alloys. They can be applied at much higher temperatures than those of conventional titanium alloys. Technically relevant gamma titanium aluminide alloys consist of y -phase (TiAl) and small amount of α₂ phase (Ti₃Al). Depending on chemical composition and heat treatment, other minority phases can also occur. Sheets or foils made of titanium aluminides can be potentially applied in aero-engines and space shuttles. It is difficult to deform intermetallic materials because of their particular, ordered crystal structure. This makes the manufacture of sheets, thin foils and shaped parts particularly difficult. However, their availability is a precondition for the use of titanium aluminides in thin-walled sheet metal structures. Foils and thin sheets of conventional titanium alloys are also of interest as far as the application concerned. Production of foils and thin sheets from highly alloyed high-temperature titanium alloys is difficult. For this reason the invention is aimed at providing a cost-efficient method for manufacturing sheets, foils and components from gamma titanium aluminide alloys and conventional titanium alloys.

Alternative methods for manufacturing foils and sheets such as powder compaction, hot rolling and melt spinning under vacuum, electron-beam evaporation and plasma spraying have not become accepted until now. The main reasons are, on the one hand, the high cost and insufficient material quality, on the other. DE 43 04 481 A1 starts out from the assumption that such an alloy can be produced very cost-efficiently by casting but also by hot isostatic pressing of atomized powder.

According to the process described in JP 50649/89, thin sheets are manufactured from the intermetallic titanium - aluminium compound by performing the following steps:
- Heating the mixture, which consists of 35 to 44 per cent by weight of Al and the remainder of titanium under an inert-gas atmosphere to produce a melt,
- Continuous feeding of this melt to an open mould, which is defined by a pair of cooling rolls and a pair of lateral stops, the rolls rotating at a circumferential speed of 0.1 to 10 m/s, and
- Cooling the melt by means of the cooling rolls inside the roll gap, with a constant force being applied to these rolls in order to form a reinforced sheet whose thickness corresponds to the clearance between the rolls.

JP 122885-78 suggests another method for producing an alloy of titanium and aluminium. Titanium powder and aluminium powder are mixed; the mixture is then pressed and the compact heated, under vacuum or under an inert-gas atmosphere, to a temperature that is lower than the melting temperature of aluminium but not lower than 500° C. Heating of the resulting body is continued at a temperature that is equal or higher than the melting temperature of aluminium. This method is not suitable for production of large sheets and foils. Another disadvantageous effect is that due to the relatively large surface of aluminium powder, which is known to consist always of aluminium oxide, a large quantity of oxygen is introduced into the alloy, which may give rise to quality problems.

In many cases attempts were made to produce foils and sheets by reaction annealing of titanium and aluminium foils.

A method described in the literature is, for instance, vacuum hot pressing of titanium and aluminium foils arranged in alternate layers [Fukutomi, H., et al, Production of TiAl sheet with oriented lamellar microstructure by diffusional reaction of aluminium and textured titanium foils; Materials Transactions, JIM, 1999. 40(7): p. 654-658 and Su., V., Zhang, G., Guo, J., Jia, J., Fu, H., Investigation on α fabrication technique of TiAl sheet, Materials Science Forum, 2005. 475-479: p. 805-808]. They were annealed initially at 550°C and then at 630°C (below the melting point of aluminium) until the aluminium portion was used up completely. The final heat treatment at 1350°C, below the melting temperature of the intermetallic phase TiAl₃ (Tₘ[TiAl₃]= 1395°C), resulted in a sheet consisting of the two phases γ-TiAl and α₂-TiAl₃. However, this process has the following major disadvantages:

The different diffusion rates of aluminium and titanium during the formation of the titanium aluminide alloy result in the formation of porosity (Kirkendall pores). To prevent them the vacuum hot pressing process must be carried out at a pressure of 20 MPa and a temperature of 1350°C. This increases considerably the production cost; furthermore the production of foils becomes more difficult. Thicker sheets have to be made of a multitude of titanium and aluminium foils, which reduces the economic efficiency of the production process.

DE 10 2006 031 469 B4, too, describes a process for manufacturing a component from a titanium flat product for high-temperature applications, which includes the following steps:
a) applying an Al layer at least to one side of the titanium flat product by roll cladding the titanium flat product with an aluminium alloy foil
b) cold rolling the titanium flat product with the aluminium layer at a reduction ratio of 30-90%,)
c) soft annealing the titanium flat product covered with the aluminium layer in a continuous furnace or hood-type furnace,
d) forming the component from the soft-annealed titanium flat product covered with aluminium layer,
e) heat-treating the component formed of the titanium flat product covered with the aluminium layer to induce the formation of a coating comprising an intermetallic phase.

Since the thickness of the Al layer on the titanium flat product does not exceed 90 µm, particularly 70 µm, after roll cladding and cold rolling, only a layer close to the surface has transformed into titanium aluminide. Although components made from it have the abrasion resistance of the alloy, their mechanical strength, however, largely corresponds to that of the titanium body.

Consequently, the aim of the invention is to suggest a process for manufacturing foils, sheets and shaped parts from an alloy with titanium and aluminium as its main elements, especially titanium alloy and gamma titanium aluminide alloy, by means of which these products can be produced cost-efficiently without defects related to conventional sintering processes occurring.

According to the invention, a process comprising the steps outlined in the main claim achieves this task.

The sub claims detail different solutions to this purpose.

In this process, foils, sheets and shaped parts are produced from an alloy with titanium and aluminium as its main elements, particularly titanium alloy or titanium aluminide alloy in that capsules of titanium and/or titanium alloy are filled completely either with one layer of foil or sheet of aluminium and/or aluminium alloy or with alternating layers of foil or sheet of aluminium and/or aluminium alloy and titatium and/or titanium alloy. Although both foils and sheets may be applied we will only refer to sheets for the sake of simplicity in the following. The wording sheets can also comprise a tube-like shape in specific embodiments. These sheets consist of aluminium and/or aluminium alloys - in the following summed up under the term aluminium - on the one hand and titanium and/or titanium alloys - in the following summed up under the term titanium, on the other hand. The borders of these capsules are sealed by means of welding techniques with a vacuum created inside the capsules and the capsules are annealed under a pressure between 1 bar and 2500 bar at a temperature between 900°C and 1450°C where TiAl₃ is already soft or liquid but still below the melting point of the final product until TiAl₃ has disappeared due to diffusion, i.e. finally the desired alloy forms. A vacuum has to be created during the welding process inside the packing because otherwise air or gas blisters can form. That can be achieved by sealing the packing under vacuum but evacuation of the sealed packing via a connecting sleeve or a valve is also in accordance with the invention. The necessary pressure can be provided either by a mechanical pressing or by a gas pressure, preferably by gas pressure of a protective gas atmosphere. A gas pressure is preferred because a large number of capsules can be treated in a charge and there is no limit for the capsule shape. At lower pressures, the annealing temperature has to be higher and the annealing time is longer than at high pressures. Approximately 1 bar corresponds to protection gas operation in a furnace. The pressure ranges form 1.0 bar for a furnace without pressure-relief valve to 1.3 bar for with such a valve. Although a pressure less than 1 bar is allowed and practicable, it is technically unnecessary. In most cases, a high pressure, the so-called hipping (hot isostatic pressing), is preferred in order to get a dense material within a short time. Hipping is done usually above 1000 bar. But annealing below 1000 bar is in accordance with the invention too. An annealing below the melting point of TiAl₃ (1395°C) is preferred. Annealing above this temperature can lead to a heterogeneous Al distribution if the sheet is not horizontally placed. However, the temperature can be increased above this temperature after the consumption of TiAl₃. This can reduce the annealing time. All these variants (900°C-1450°C, 900°C-1395°C or 900°C-1395°C + increasing temperature up to 1450°C) are referred to as final reaction annealing.

The individual sheets within the capsule are stacked so that aluminium and titanium alternate.

Niobium-containing titanium aluminide alloys can be made by using niobium-containing Ti-sheet or by using additional niobium sheets.

For the production of shaped parts, there are four methods:
a) construction of a capsule with the shape of the final product + final reaction annealing
b) capsule construction + deformation + final reaction annealing
c) capsule construction + pre-reaction annealing between 660°C and 1200°C + deformation + final reaction annealing
d) joining of capsules + final reaction annealing

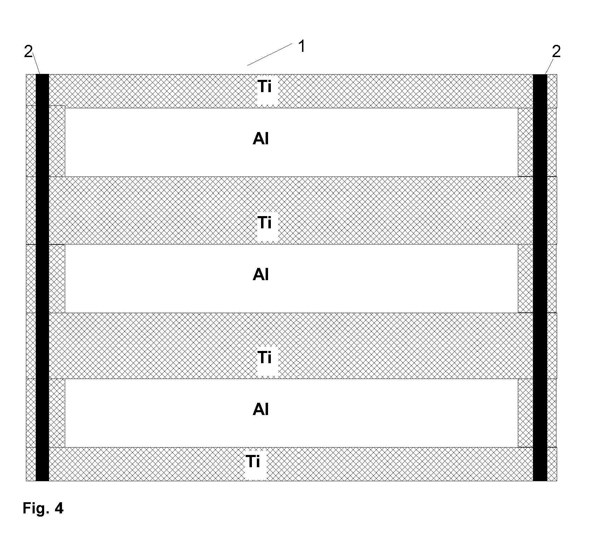

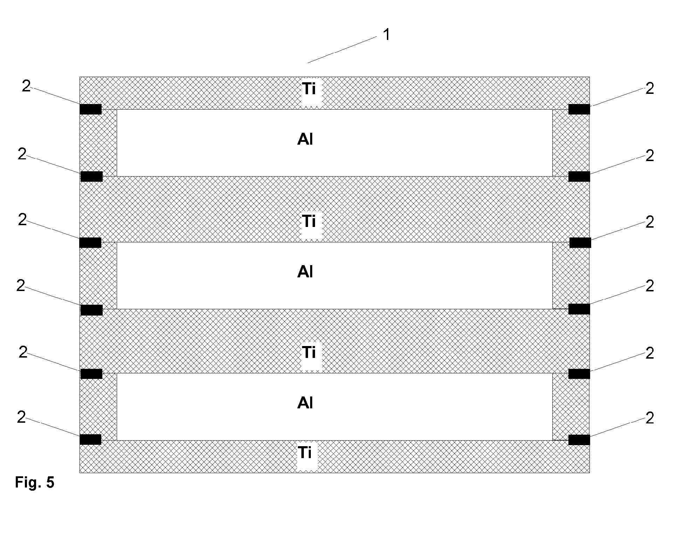

The method a) is the most straightforward method. The sheets for capsule construction can be straight or pre-deformed. The method b) can save deformation work because no individual deformation is necessary for titanium sheets and aluminium sheets. The deformation of the capsule takes place at room or a higher temperature. However, a reaction annealing of the deformed capsule without constraint can lead to heterogeneous aluminium distribution due to the hydrostatic pressure of the aluminium melt. The method c) has the advantage of method b) and not its disadvantage. A flat capsule can be pre-reaction annealed between 660°C and 1200°C with a horizontal position. The heterogeneous distribution of Al will not occur even in case of a not well horizontally positioned sheet without a constraint because the hydrostatic pressure difference in the flat capsule of the aluminium melt is so low that a local swelling of the capsule, which causes a heterogeneous Al distribution, does not occur. The deformability of a pre-reaction-annealed capsule may not be as good as that without any reaction annealing. With the method d) some very complicated parts can be also produced. This method can also combine the methods a)-c). According to this invention, the product after joining of a multitude of capsules is defined as a capsule too. For example, a blade can be made by joining an airfoil part, which may be made with method c) but without the final reaction annealing, and a foot part. The final reaction annealing takes place after joining of the parts. Compressor housings can be also made by joining of rings with different dimensions, which are made with method a), so that steps such as slots to hold guide vanes can be near-net-shape prepared. The turning cost can be reduced. The capsules in Fig. 4 and 5 can be understood that they are made by joining of a multitude simple capsules.

In order to get a uniform Al distribution of shaped parts, especially for parts in which there is a large hydraulic pressure of Al melt, a capsule shape change due to a hydraulic pressure from Al melt should be prevented. This can be realized by a two-step annealing which can be applied for any capsules, but first of all for the above mentioned four methods for shaped parts. This means that a capsule is pre-reaction annealed between 660°C and 1200°C before the final reaction annealing. Preferably, the pre-reaction annealing between 660°C and 1200°C of the capsule is done with a constraint. Under constraint the capsule will be annealed until Aluminium is fully consumed. In the second step, the capsule will be annealed between 900°C and 1450°C without constraint.

For simple shapes, the constraint is provided by putting the capsule in a thermal-expansion-tool which consists of a tension member and compression member having a higher thermal expansion coefficient than the tension member. For example, the compression member can be made from austenite steels and the tension member from nickel alloys.

For complicated shapes, the capsule can be embedded in sand or other powders with or without binders in order to provide the constraint.

Welding at the borders means that the welding is done along the edge so that the inside is closed. Two exemplary embodiments of welding at the borders are shown in Fig. 1 and Fig. 2. Other examples are shown in Fig. 3-6 and 9.

A simple capsule consists of two titanium sheets between which only one aluminium sheet or alternative aluminium and titanium sheets are placed until the desired material thickness is attained. These outer titanium sheets are joined by one ring made of the same titanium and welded with each other under vacuum or by means of a process creating a vacuum inside the packing.

The welding at the borders can be done vertically in relation to the sheet(s) surface, in horizontal direction at the edges of the sheets or at the corners. In case of vertical welding, the welding is done in the area of the ring(s).

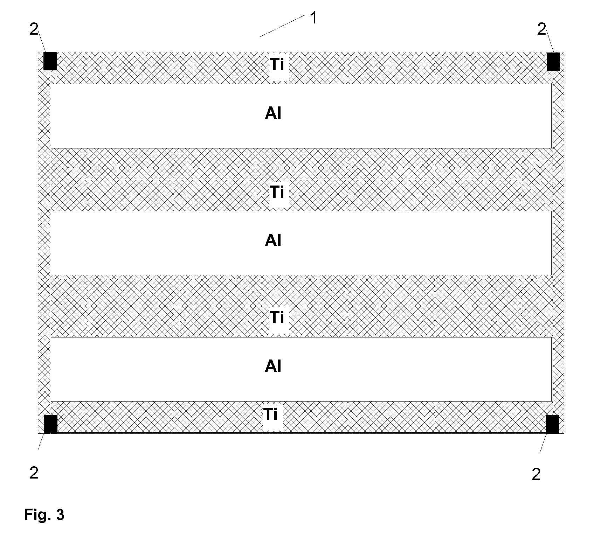

Different construction forms for a capsule with alternate aluminium sheet and titanium sheet are shown in Fig. 3-5. The drawings 1-5 show the cross section of a capsule. The capsule can be round, square, rectangular or other shapes. A titanium sheet can also be replaced by more sheets of the same total thickness.

Shaped parts can be made by reaction annealing of shaped capsules. As the capsules are already shaped like the shaped bodies to be produced and the shrinkage occurring during reaction annealing is taken into account, the necessary finishing operations can be minimized.

Shaped capsules can be made by welding construction of the capsule. The titanium and aluminium sheets can be flat or pre-deformed through sheet metal deformation. The capsule shape can be also given by deformation of the welded capsule or given by deformation of the capsule after a pre-reaction annealing between 660°C and 1200°C. In a preferred embodiment, the capsules are made or the capsule shape is given by joining of multitude of capsules with vacuum created in spaces between individual capsules.

According to the invention, components of aircraft engines, especially from conventional titanium alloys or from gamma Titanium aluminides, such as compressor blades, compressor disks, housings, combustion chamber parts, turbine blades and tailpipe (exhaust) components can be made.

In other words, the invention also comprises parts of aircraft engines, especially compressor blades, disks, housings, combustion chamber parts, turbine blades and tailpipe components made by a process wherein capsules of titanium and/or titanium alloy are filled completely either with one layer of foil or sheet of aluminium and/or aluminium alloy or with alternating layers of foil or sheet of aluminium and/or aluminium alloy and titanium and/or titanium alloy, that the borders of these capsules are sealed by means of known welding techniques with a vacuum created inside the capsules, and that the capsules are annealed under a pressure between 1 bar and 2500 bar at a temperature between 900°C and 1450°C where TiAl₃ is already soft or liquid but still below the melting point of the final product until TiAl₃ has disappeared due to diffusion, i.e. finally the desired alloy forms.

Disks or other flat components can be produced by reaction annealing of a capsule with any form showed in Fig. 3-5.

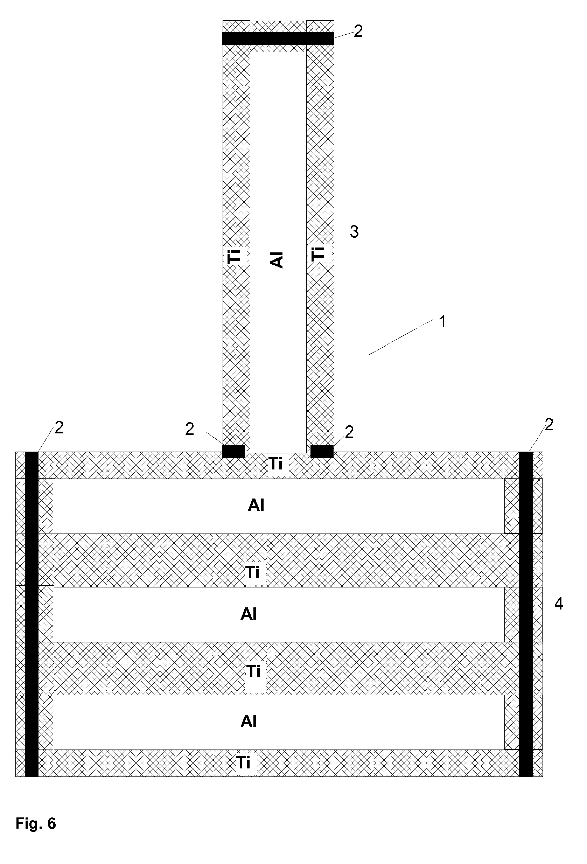

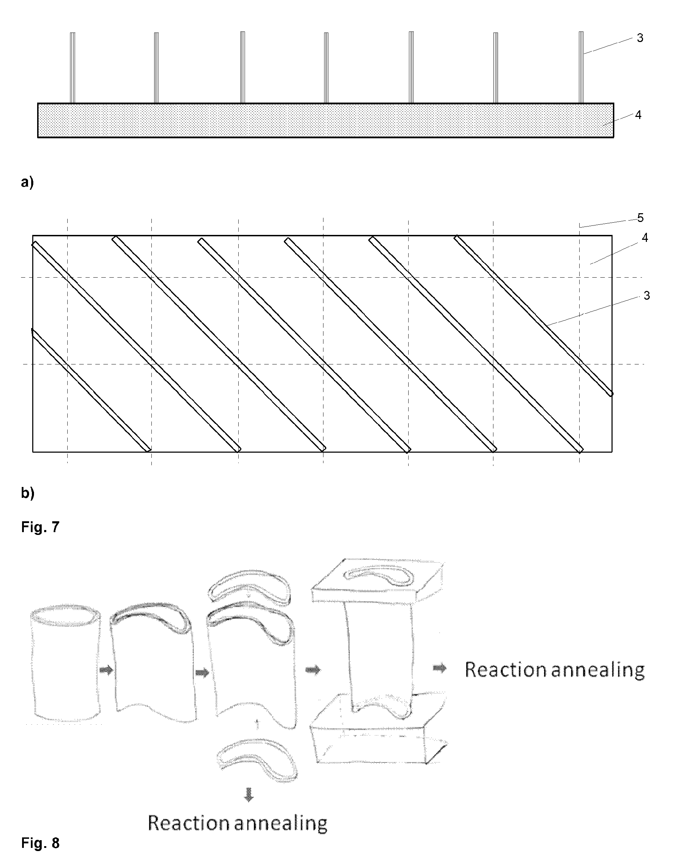

Fig. 6 shows a construction of a capsule for gas turbine engine high-pressure compressor blades having airfoil and foot part. Only one layer of Al sheet is graphically represented in the airfoil. Multilayer of alternate Al and Ti sheets can be also used in order to reach a required thickness. The airfoil part can also be prepared as an individual capsule. It means that its bottom is already closed with a titanium sheet before joining to the foot. Before joining the airfoil and foot, the airfoil can be deformed to the desired shape either after welding or after a pre-reaction-annealing between 660°C and 1200°C. This method can reduce the electrochemical machining (ECM) costs for the airfoil machining. In order to increase the production efficiency, a multitude of blades can be made with a large capsule (Fig. 7a). Fig. 7b shows the top view of Fig. 7a. A thick part has a multitude of rows of thin parts in vertical direction. Each row of the thin parts can be composed of multitude of curved segments, each of which corresponds to the airfoil of a blade. After the reaction annealing, the capsule will be cut along the dashed lines. Afterwards, a blade can be machined from each piece. The airfoil will be machined from the thin part and foot from the thick part.

With a method similar to that for high-pressure compressor blades, low-pressure turbine blades can be made too. Different from the compressor blades there is an additional shoulder at another side of the blade.

Hollow low-pressure turbine blades can be made too. Fig. 8 shows a considerable process. At first a tube with multilayer of alternate Ti and Al tube will be prepared with titanium as outer tube. This sandwich tube will be deformed to the desired blade shape. Now a Ti sheet with a shape corresponding to the blade cross section will be welded to the top of the blade and another to the bottom of the blade. Alternatively, the bottom and the top can be welded to the tube before the deformation. This capsule can be heat treated to transform it to the final desired microstructure. This blade will, during gas engine montage, be fixed with shoulder and foot by screws or rivets. Alternatively, the blade capsule can be welded with shoulder and foot which are capsules made from titanium sheets and aluminium sheets too. Finally the assembly will be annealed to transform it to the final material.

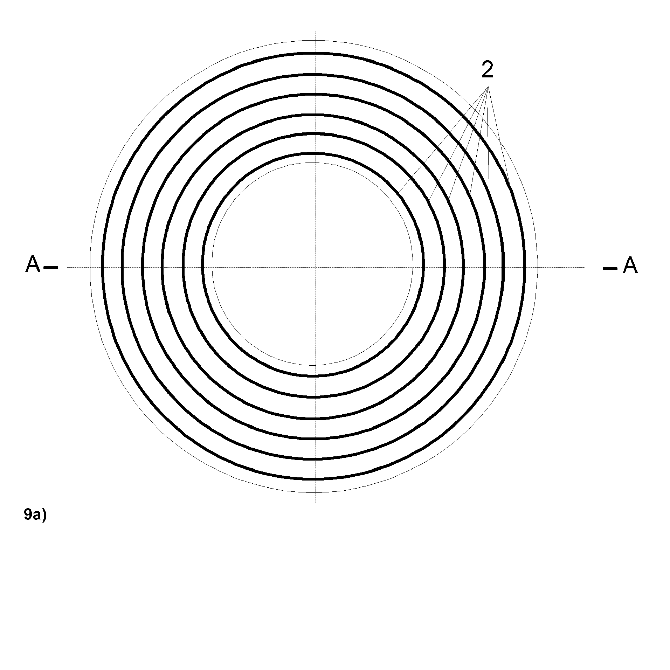

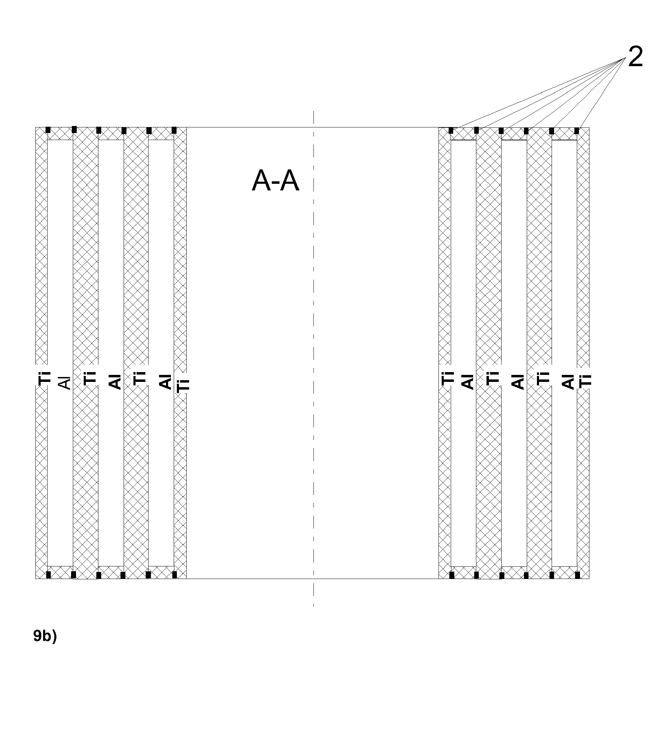

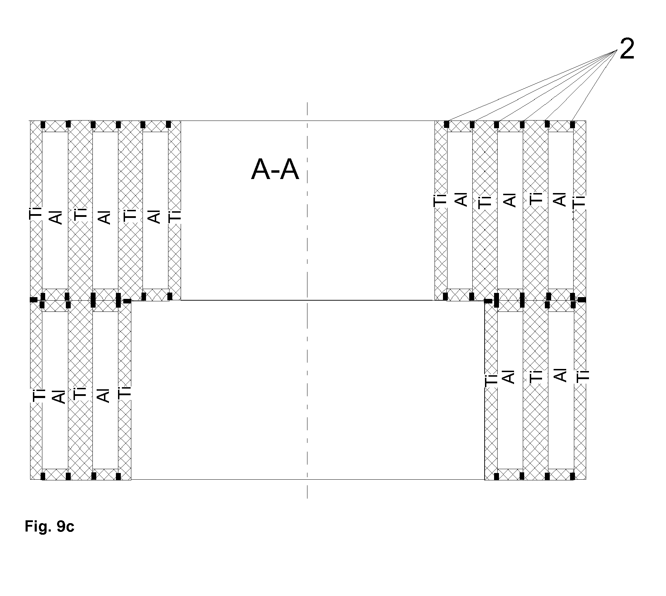

With the method of the invention gas turbine compressor housings can be made too. The simplest method is construction of a ring-shaped capsule (Fig. 9a and 9b). Other construction methods, similar to Figure 3 or 4 can be also used. In order to reduce machining cost, the different cross section of housing can be realized by joining of rings with different cross sections (Fig. 9c). The spaces between individual rings should be sealed with vacuum created inside so that they can become a unite part through diffusion welding process during the reaction annealing.

Thus, the process according to the present invention is especially used in order to prepare such components.

Especially when making shaped bodies, it is in accordance with the invention to embed, during this process, reinforcements in the form of fibres, wires or particles of high-strength materials, in particular niobium alloys and/or silicon carbide, between the individual layers so that they are firmly enclosed by the final product.

### Description of Figures

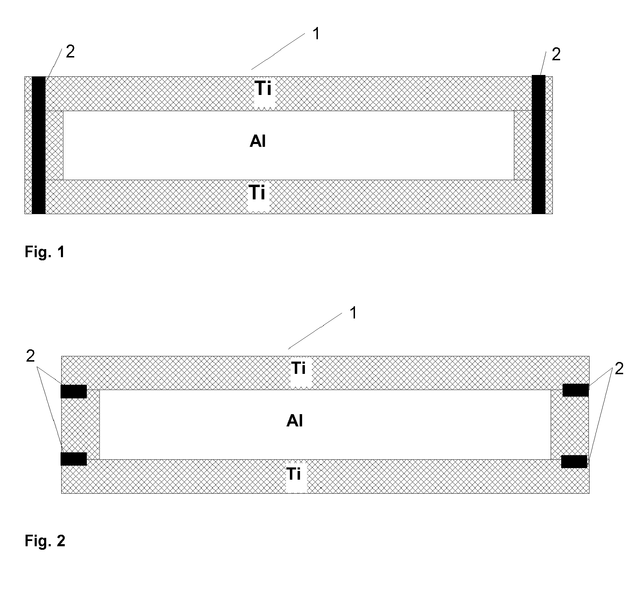

- Fig. 1:: shows welding at the borders of Ti layers [capsules(1)]. The dark thick line is the welding seam (2).
- Fig. 2:: shows welding at the borders of Ti layers [capsules (1)], wherein the welding is done at the outer edges. The dark thick line is the welding seam (2).
- Fig. 3:: shows an exemplary capsule (1) for massive construction elements with welding seam (2). Welding is done at the corners of the surrounding Ti sheets. The Ti sheets inside the capsule have to be fixed by Ti spacers or by welding on the casing (not shown).
- Fig. 4:: shows an exemplary capsule (1) for massive construction elements with welding seam (2). The welding is done in vertical direction in the area of the Ti ring.
- Fig. 5:: shows an exemplary capsule (1) for massive construction elements with welding seam (2). Welding is done in horizontal direction.
- Fig. 6:: shows an exemplary capsule (1) for compressor blades with welding seam (2) having a thin part (3) and a thick part (4).
- Fig. 7a: shows the cross-sectional view of a capsule (detail of Al and Ti sheets are not shown) having thick parts (4) and multitude rows of thin parts (3) in vertical direction.
- Fig. 7b: shows the top view of the capsule of Fig. 7a having thick parts (4) and multitude rows of thin parts (3). The capsule is cut along the cutting lines (5), represented as dashed lines, after the reaction annealing.
- Fig. 8: shows a process to produce hollow low-pressure turbine blades.
- Fig. 9a: shows the top view of a ring-shaped capsule (1) with welding seams (2).
- Fig. 9b: shows a cross-sectional view of a ring-shaped capsule (1).
- Fig. 9c: shows a cross-sectional view of a ring-shaped capsule (1) with change of cross section.

### Reference numbers:

- 1: capsule
- 2: welding seam
- 3: thin part
- 4: thick part
- 5: cutting line for cutting after reaction annealing

The invention will now be described in greater detail by means of embodiment:

TiAl sheet: Two titanium sheets (diameter 26 x 0.5mm), two titanium rings (outside diameter 26mm, inside diameter 24mm, thickness 0.5mm) and one aluminium sheet (diameter 24 x 0.8mm) were fixed in the above-described thermal-expansion- tool. Aluminium sheet and titanium rings were placed in the middle. This specimen was annealed under vacuum at 600°C for 30 hours in order to weld the specimen at the border area. The specimen was then removed from the fixing device and heat-treated at 1400°C (above the melting point of the TiAl₃ phase) in argon of 1.3 bar for two hours, until aluminium and titanium have reacted completely to yield γ-TiAl+ Ti₃Al; however, the chemical composition across the sheet width is inhomogeneous. In a second trial, the specimen was annealed in argon of 1.3 bar at 1370°C, which is below the melting temperature of TiAl₃, for 10 hours, resulting in homogenous sheet thickness and chemical homogeneity.

## Claims

1. Process for manufacturing foils, sheets and shaped parts from an alloy with titanium and aluminium as its main elements, **characterized in that** capsules of titanium and/or titanium alloy are filled completely either with one layer of foil or sheet of aluminium and/or aluminium alloy or with alternating layers of foil or sheet of aluminium and/or aluminium alloy and titanium and/or titanium alloy, that the borders of these capsules are sealed by means of known welding techniques with a vacuum created inside the capsules, and that the capsules are annealed under a pressure between 1 bar and 2500 bar at a temperature between 900°C and 1450°C where TiAl₃ is already soft or liquid but still below the melting point of the final product until TiAl₃ has disappeared due to diffusion.

2. Process according to Claim 1, **characterized in that** additional niobium foils are inserted in the sandwich.

3. Process according to Claim 1 or 2, **characterized in that** the pressure is provided by the gas pressure of a protective gas atmosphere.

4. Process according to any one of Claims 1-3, **characterized in that** the capsules consist of two foils or sheets of titanium or titanium alloys, which are joined by a ring of the same material and are welded with each other under vacuum or by means of a process creating a vacuum inside the packing.

5. Process according to any one of Claims 1-4, **characterized in that** the capsules have the shape of the shaped bodies to be produced and that the shrinkage occurring during reaction annealing is taken into account.

6. Process according to claim 5, **characterized** that the capsule shape is given by welding construction of the capsule.

7. Process according to claim 5, **characterized** that the capsule shape is given by deformation of the welded capsule.

8. Process according to claim 5, **characterized** that the capsule shape is given by deformation of the capsule after a pre-reaction-annealing between 660°C and 1200°C

9. Process according to any one of Claims 5-8, **characterized** that the capsule is made or the capsule shape is given by joining of multitude of capsules with vacuum created in spaces between individual capsules.

10. Process according to any one of Claims 4-9, **characterized** that the annealing between 660°C and 1200°C is conducted under a constraint.

11. Process according to Claim 10, **characterized** that the constraint is provided by putting the capsule in a thermal-expansion-tool which consists of a tension member and compression member having a higher thermal expansion coefficient than the tension member.

12. Process according to Claim 10, **characterized** that the constraint is provided by putting the capsule in sand or other powder, with or without binders.

13. Process according to any one of the preceding Claims, **characterized in that**, during the process, reinforcements in the form of fibres, wires or particles of high-strength materials are embedded between the individual layers in such a way that these reinforcements are firmly enclosed by the final product.

14. Use of the process according to any one of claims 1-13 for the preparation of components such as parts of aircraft engines, especially compressor blades, disks, housings, combustion chamber parts, turbine blades and tailpipe components.

15. Parts of aircraft engines, especially compressor blades, disks, housings, combustion chamber parts, turbine blades and tailpipe components made by a process wherein capsules of titanium and/or titanium alloy are filled completely either with one layer of foil or sheet of aluminium and/or aluminium alloy or with alternating layers of foil or sheet of aluminium and/or aluminium alloy and titanium and/or titanium alloy, that the borders of these capsules are sealed by means of known welding techniques with a vacuum created inside the capsules, and that the capsules are annealed under a pressure between 1 bar and 2500 bar at a temperature between 900°C and 1450°C where TiAl₃ is already soft or liquid but still below the melting point of the final product until TiAl₃ has disappeared due to diffusion.
